# EUROPÄISCHE PATENTSCHRIFT

(11) **EP 2 062 795 B1**
(45) Veröffentlichungstag und Bekanntmachung des Hinweises auf die Patenterteilung: **22.05.2013**
(21) Anmeldenummer: 08017104.4
(22) Anmeldetag: 29.09.2008
(51) Int. Cl.: B60T 8/32, B60T 7/22

(54) **Verfahren und Vorrichtung zur Zielbremsung eines Kraftfahrzeugs**
Method and device for targeted braking of a motor vehicle
Procédé et dispositif de freinage ciblé d'un véhicule automobile

(30) Priorität: 23.11.2007 DE 102007056780
(43) Veröffentlichungstag der Anmeldung: 27.05.2009
(73) Patentinhaber: Volkswagen Aktiengesellschaft, 38440 Wolfsburg (DE)
(72) Erfinder: Busch, Sebastian, Dr., 38118 Braunschweig (DE); Steiner, Tobias, Dr., 38550 Isenbüttel (DE); Kopischke, Stephan, Dr, 38446 Wolfsburg (DE)
(74) Vertreter: Meyer, Enno

(56) Entgegenhaltungen:
- EP-A- 0 899 174
- EP-A- 1 238 876
- DE-A1- 10 208 516
- DE-A1- 19 942 290
- DE-A1-102004 056 119
- KONIK D ET AL: "ELEKTRONISCHES BREMSEN MANAGEMENT ALS ERSTER SCHRITT ZU EINEM INTEGRIERTEN CHASSIS MANAGEMENT" ATZ AUTOMOBILTECHNISCHE ZEITSCHRIFT, VIEWEG PUBLISHING, WIESBADEN, DE, Bd. 101, Nr. 4, 1. April 1999 (1999-04-01), Seiten 220-222,224, XP000824321 ISSN: 0001-2785

## Beschreibung

Die Erfindung betrifft ein Verfahren und eine Vorrichtung zur Zielbremsung eines Kraftfahrzeugs durch Bremskraftunterstützung eines von einem Fahrer durchgeführten Bremsvorgangs gemäß dem Oberbegriff des Anspruchs 1 bzw. des Anspruchs 6.

Bei einer Vollbremsung ist die seitens des Fahrers aufgebrachte Bremskraft aufgrund beispielsweise eines zögerlichen Verhaltens und eventueller Unentschlossenheit oftmals zu gering. Um bei derartigen Fällen eine ausreichende Bremskraft zu erzeugen, sind Bremsassistenten bekannt, die bei einer Vollbremsung automatisch für einen maximalen Bremsdruck sorgen. Derartige herkömmliche Bremsassistenten werden jedoch nur dann ausgelöst, wenn die vom Fahrer aufgebrachte Bremskraft eine vorgegebene Schwelle unterschreitet. Sollte der Fahrer daher diese Schwelle nicht überschreiten, so bleibt der Bremsassistent passiv, was sich unter Umständen negativ auf den Bremsweg auswirkt.

Eine Weiterentwicklung derartiger Bremssysteme ist in der DE 10 2004 028 160 A1 beschrieben und umfasst einen Bremsassistenten und eine Einrichtung zur Abstandsmessung zu einem Kollisionsobjekt, wie beispielsweise einem parkenden oder vorausfahrenden Fahrzeug. Der vom Bremsassistenten erzeugte Bremsdruck wird in Abhängigkeit einer fahrerseitigen Bremskraft und einer Abstandsinformation zu dem Kollisionsobjekt derart geregelt, dass bei einer Bremsbetätigung durch den Fahrer und einer in Bezug auf die Abstandsinformation zu geringen fahrerseitigen Bremskraft zur Vermeidung einer Kollision der Bremsassistent den Bremsdruck automatisch erhöht. Hierdurch ergibt sich ein Bremssystem, das den Fahrer bei jedem Bremsvorgang gegen eine zu schwache Betätigung der Fahrzeugbremse schützt. Im Unterschied zu dem einfachen Bremsassistenten kann damit eine drohende Kollision auch dann vermieden werden, wenn der Fahrer mit so geringer Kraft bremst, dass eine Auslöseschwelle für den Bremsassistenten nicht überschritten werden würde. Ferner hat der Fahrer den Bremsvorgang im Unterschied zu einer vollautomatischen Notbremsung weiterhin unter Kontrolle, indem er den Bremsvorgang durch ein Nichtbetätigen der Bremse beendet. Allerdings kann das System vorsehen, dass bei bestimmten Umständen eine Notbremsung ausgelöst wird, falls eine Kollision nicht mehr zu vermeiden ist.

Nachteilig bei der gattungsgemäßen Lösung ist, dass das Bremsverhalten des Bremsassistenten in gewisser Weise einen festgelegten Verlauf aufweist, was zu einem für den Fahrer unkomfortablen Bremsverhalten führen kann.

Die Druckschrift DE 199 42 290 A1 beschreibt ein Bremssystem zur automatischen Durchführung eines Bremsvorgangs, wobei Bremseinstellungen an eine veränderte Situation eines Fahrzeugaggregates adaptiert werden, um eine ausreichende automatische Bremswirkung zu erzeugen. Dabei werden Voreinstellungen in der Bremseinheit, nämlich insbesondere Bremsen-Vordruck, Gradient des Bremsdrucks, maximal zulässige Geschwindigkeit und/oder Minimalabstand zum vorausfahrenden Fahrzeug, an den verschlechterten Zustand des Fahrzeugaggregats angepasst. Ferner kann auch der Fahrertyp bei der Adaptierung der Voreinstellungen berücksichtigt werden.

Druckschrift DE 10 2004 056119 A1 betrifft ein Verfahren zum Betreiben eines Bremsassistenzsystems in einem Fahrzeug, wobei das System zwischen einer Gefahrenbremsung und einer Normalbremsung unterscheiden kann. Die Unterscheidung erfolgt mittels einer Schwelle, die aus den Merkmalen Bremsmoment und Bremsmomentgradienten festgelegt wird. Das Bremsverhalten des Fahrers wird berücksichtigt, wobei die Berücksichtigung den Verlauf der Schwelle betrifft.

Druckschrift EP 1 238 876 A1 zeigt ein mit einem automatischen Abstands- und Geschwindigkeitsregelsystem versehenen Bremsassistenten, welcher in dem Fall, in dem der Fahrer durch Betätigung der Bremse das Regelsystem außer Kraft setzt, die Bremsphase des Fahrers unterstützt. Dabei richtet sich die Verzögerung des Fahrzeugs nach einem Sollwert, der in Echtzeit als Funktion des relativen Abstandes und der relativen Geschwindigkeit bestimmt wird.

Der Artikel Konik, D., et.al.:" Elektronisches Bremsenmanagement als erster Schritt zu einem integrierten Chassis Management", ATZ Automobiltechnische Zeitschrift, Vieweg Publishing, Wisebaden, Deutschland, Band 101, Nr. 4, 1. April 1999, Seiten 220-222, zeigt ein Bremssystem, bei dem in Notbremssituationen die Bremsunterstützung die Bremskraft möglichst schnell bis zur Kraftschlussgrenze gesteigert wird, so dass beide Achsen sofort in die ABS-Regelung überführt werden, wenn der Fahrer das Bremspedal sehr schnell betätigt. Wird das Bremspedal unterhalb der Auslöseschwelle für die Notbremssituation betrieben, wobei der Fahrer das Bremspedal langsamer, aber steig zunehmend so weit durchtritt bis die Vorderräder in den ABS-Bereich gelangen, so erhöht das Bremssystem den Bremsdruck an den Hinterräderns so weit bis auch die Hinterachse in den ABS-Bereich gelangt.

Druckschrift DE 102 08 516 A1 zeigt ein Verfahren zur Regelung einer elektronisch regelbaren Bremsanlage für ein Kraftfahrzeug, bei dem aufgrund einer Bremsanforderung des Fahrers oder eines Bremsassistenten das Radbremsmoment nach einer vorgegebenen degressiven Funktion aufgebaut wird, die fest vorgegeben ist.

Der Erfindung liegt daher die Aufgabe zugrunde, ein Verfahren und eine Vorrichtung für eine Zielbremsung zu schaffen, welche für den Fahrer mit einem höheren Komfort verbunden ist.

Diese Aufgabe wird durch ein Verfahren mit den Merkmalen des Anspruchs 1 sowie durch eine Vorrichtung mit den Merkmalen des Anspruchs 6 gelöst. Bevorzugte Ausführungsformen der Erfindung sind Gegenstand der Unteransprüche.

Bei dem erfindungsgemäßen Verfahren zur Zielbremsung eines Kraftfahrzeugs durch Bremskraftunterstützung eines von einem Fahrer durchgeführten Bremsvorgangs mittels eines Bremsassistenten, wobei der Abstand zu einem vor dem Kraftfahrzeug befindlichen Objekt erfasst und der vom Bremsassistenten erzeugte Bremsdruck zumindest als Funktion der fahrerseitigen Bremskraft und der Abstandsinformation so geregelt wird, dass bei einer Bremsbetätigung durch den Fahrer und einer in Bezug zur Abstandsinformation zu geringen fahrerseitigen Bremskraft zur Vermeidung einer Kollision der Bremsassistent den Bremsdruck geeignet erhöht, weist der Bremsdruck einen vorgegebenen zeitlichen Verlauf auf, wobei in dem Bremsassistenten drei vorbestimmte zeitliche Verläufe realisiert sind, namlich einen progressiven Verlauf, einen degressiven Verlauf oder einen konstanten Verlauf des Bremsdrucks bzw. der Bremsverzögerung in zeitlicher Richtung. Dabei erfolgt die Auswahl des vorbestimmten zeit Lichen Verlaufs durch Beobachtung Bremsverhaltens des Fahrers.

Der oder die vorbestimmten zeitlichen Verläufe können durch eine Funktion oder ein vorbestimmtes Kennfeld, die vorzugsweise in einem Speicher abgelegt sind, realisiert werden.

Vorzugsweise kann aus dem über eine vorbestimmte Anzahl von Bremsvorgängen ermittelten bevorzugten Bremsverhalten des Fahrers ein geeigneter vorbestimmter zeitlicher Verlauf des Bremsverhaltens des Bremsassistenten ausgewählt werden. Dies kann beispielsweise dadurch geschehen, dass über eine geeignete Beobachtungseinrichtung das Bremsverhalten des Fahrers über eine vorgegebene Anzahl von Bremsvorgängen analysiert wird, und der Bremsassistent so mittels des Ergebnisses der Beobachtungseinrichtung feststellen kann, ob der jeweilige Fahrer mehr zu einem progressiven, degressiven oder konstanten Bremsverhalten neigt. Eine entsprechende Auswahl dieses vorbestimmten Verhaltens vermittelt folglich dem Fahrer ein gesteigertes Komfortgefühl, da der Bremsassistent das Bremsverhalten des Fahrers quasi nachahmt.

Weiterhin ist es vorzugsweise möglich, dass der Fahrer mittels einer geeigneten Benutzeroberfläche das bevorzugte zeitliche Bremsverhalten des Bremsassistenten vorgibt. In einer weiteren bevorzugten Ausführungsform priorisiert diese Vorgabe das Ergebnis der Beobachtungseinrichtung des fahrerischen Bremsverhaltens.

Ferner kann das zeitliche Verhalten des Bremsvorgangs bzw. des Bremsdrucks des Bremsassistenten auch von äußeren Einflüssen abhängig sein, d.h., Einflüssen aus der Umgebung des Kraftfahrzeugs. So kann beispielsweise eine Einrichtung im Kraftfahrzeug angeordnet sein, die über eine Straßenzustandserkennung den aktuellen Reibwert der Straße bestimmt, wodurch quasi über diese Randbedingung der zeitliche Verlauf der Zielbremsung auch entgegen den fahrerischen Wünschen und/oder des Ergebnisses der Beobachtungseinrichtung ausgewählt werden kann. Weiterhin kann dieser Reibwert auch die Eingriffsschwellen des Bremsassistenten verändern, so muss der Bremsassistent bei nasser Fahrbahn beispielsweise früher und gegebenenfalls mit entsprechend angepasstem Bremsdruck eingreifen.

Eine erfindungsgemäße Vorrichtung zur Durchführung des im vorangegangenen beschriebenen Verfahrens umfasst einen Bremsassistenten sowie eine Einrichtung zur Abstandsmessung zu einem vor dem Eigenfahrzeug befindlichen Objekt, wobei der vom Bremsassistenten erzeugte Bremsdruck zumindest als Funktion der fahrerseitigen Bremskraft und der Abstandsinformation so geregelt wird, dass bei einer Bremsbetätigung durch den Fahrer und einer in Bezug zur Abstandsinformation zu geringen fahrerseitigen Bremskraft zur Vermeidung einer Kollision mit dem Objekt der Bremsassistent den Bremsdruck in geeigneter Weise erhöht, wobei der Bremsassistent eine Speichereinrichtung aufweist, in der in geeigneter Form mindestens ein zeitlicher Verlauf des Bremsdrucks abgelegt ist.

Ferner kann die erfindungsgemäße Vorrichtung eine Fahrerbeobachtungseinrichtung aufweisen, die anhand einer vorzugsweise vorgegebenen Anzahl von Bremsvorgängen das Bremsverhalten des Fahrers analysiert, wodurch der Bremsassistent einen geeigneten zeitlichen Verlauf des Bremsdrucks auswählt, der in seiner Form dem bevorzugten Bremsverhalten des Fahrers entspricht.

Ferner kann die Einrichtung so ausgelegt sein, dass der bevorzugte zeitliche Verlauf des Bremsdrucks als Funktion des Fahrers gespeichert wird. Dadurch wird erreicht, dass das jeweilige Fahrerverhalten bei wechselnden Fahrer dem Bremsassistent bekannt ist. Dies kann gewährleistet werden, indem jedem Fahrer eine fahrerspezifische Kennung zugeordnet wird.

Vorzugsweise weist die Vorrichtung eine Benutzeroberfläche, beispielsweise eine graphische Benutzeroberfläche mittels eines Touchscreens, auf, mittels welcher der Fahrer Eingaben vornehmen kann, um so sein bevorzugtes Bremsverhalten auszuwählen.

Eine bevorzugte Ausführungsform der Erfindung wird nachfolgend anhand der einzigen Figur erläutert, die die möglichen zeitlichen Verläufe des Bremsdrucks schematisch darstellt.

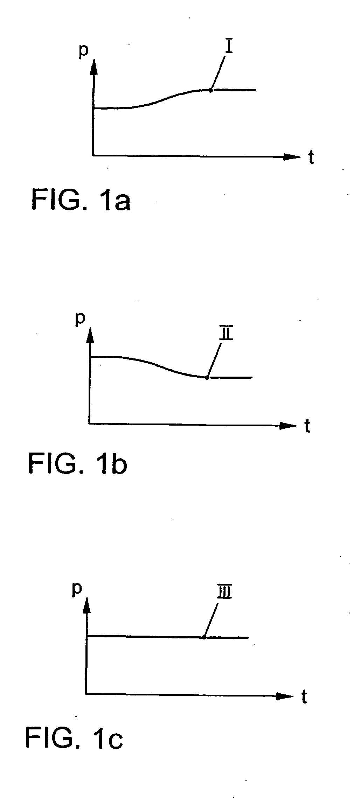

So zeigt Fig. 1a einen progressiven Verlauf des Bremsdrucks p als Funktion der Zeit t, d.h., die Verzögerung des Bremsassistenten beginnt bei dem fahrerseitigen Bremsvorgang schwach und steigt zum Ende hin an, wie dies Kurve I schematisch darstellt.

Fig. 1b zeigt den Druckverlauf anhand der Kurve II bei einem degressiven Verlauf des Bremsdrucks p als Funktion der Zeit t, bei dem die Bremsverzögerung stark beginnt und zum Ende hin abfällt.

In Fig. 1c ist anhand der Kurve III ein konstanter Verlauf des Bremsdrucks p als Funktion der Zeit dargestellt.

Durch die Beobachtung des Bremsverhaltens des Fahrers kann erkannt werden, wie dieser bevorzugt bremst, so dass der Bremsassistent einen der in Fig. 1 schematisch dargestellten Bremsverläufe auswählt und die Charakterisierung der Zielbremsung so quasi an das Verhalten des Fahrers anpasst. Es ist auch möglich, den Fahrer die Charakteristik der Zielbremsung über eine geeignete Benutzeroberfläche auswählen zu lassen.

Ferner können äußere Umstände einen bestimmten Verlauf der Verzögerung quasi vorschreiben, wodurch die Fahrercharakteristika bzw. der Fahrerwunsch überschrieben wird.

Sollte beispielsweise über eine Straßenzustandserkennung der nutzbare Reibwert der Straße verfügbar sein, wäre ein konstanter Bremsverlauf sinnvoll, um einen möglichst kurzen Bremsweg zu erzielen. Weiterhin können die Auslöseschwellen des Bremsassistenten an den Straßen-Reibwert und damit an die Bremsweglänge angepasst werden. So muss bei nasser Straße aufgrund des verringerten Reibwertes der Bremsassistent bei einem größeren Abstand eingreifen als bei trockener Straße und ebenso die Bremsverzögerung daran anpassen.

### BEZUGSZEICHENLISTE

- I: progressiver Verlauf
- II: degressiver Verlauf
- III: konstanter Verlauf

## Patentansprüche

1. Verfahren zur Zielbremsung eines Kraftfahrzeugs durch Bremskraftunterstützung eines von einem Fahrer durchgeführten Bremsvorgangs mittels eines Bremsassistenten, wobei der Abstand zu einem vor dem Kraftfahrzeug befindlichen Objekt erfasst wird und der vom Bremsassistenten erzeugte Bremsdruck zumindest als Funktion der fahrerseitigen Bremskraft und der Abstandsinformation so geregelt wird, dass bei einer Bremsbetätigung durch den Fahrer und einer in Bezug zur Abstandsinformation zu geringen fahrerseitigen Bremskraft zur Vermeidung einer Kollision der Bremsassistent den Bremsdruck geeignet erhöht,
**dadurch gekennzeichnet, dass**
der Bremsdruck einen vorbestimmten zeitlichen Verlauf aufweist, der durch einen progressiven Verlauf (I), einen degressiven Verlauf (II) oder einen konstanten Verlauf (III) realisiert ist, und
die Auswahl des vorbestimmten zeitlichen Verlaufs des Bremsdrucks durch Beobachtung des Bremsverhaltens des Fahrers erfolgt.

2. Verfahren nach Anspruch 1, **dadurch gekennzeichnet, dass** die Beobachtung über eine vorbestimmte Anzahl von Bremsvorgängen erfolgt, anhand der das Bremsverhalten des Fahrers bestimmt wird.

3. Verfahren nach einem der Ansprüche 1 oder 2, **dadurch gekennzeichnet, dass** der Fahrer den vorbestimmten zeitlichen Verlauf über eine Benutzeroberfläche auswählt.

4. Verfahren nach einem der vorangegangenen Ansprüche, **dadurch gekennzeichnet, dass** die Auswahl des vorbestimmten Verlaufs weiterhin eine Funktion des Zustands der Umgebung des Kraftfahrzeugs ist.

5. Verfahren nach Anspruch 4, **dadurch gekennzeichnet, dass** der Zustand der Straße detektiert wird und die Auswahl des vorbestimmten Verlaufs beeinflusst.

6. Vorrichtung zur Durchführung des Verfahrens nach einem der vorangegangenen Ansprüche, mit
einem Bremsassistenten, und
einer Einrichtung zur Abstandsmessung zu einem vor dem Kraftfahrzeug befindlichen Objekt,
wobei der vom Bremsassistenten erzeugte Bremsdruck zumindest als Funktion der fahrerseitigen Bremskraft und der Abstandsinformation so geregelt wird, dass bei einer Bremsbetätigung durch den Fahrer und einer in Bezug zur Abstandsinformation zu geringen fahrerseitigen Bremskraft zur Vermeidung einer Kollision der Bremsassistent den Bremsdruck geeignet erhöht,
**dadurch gekennzeichnet, dass**
der Bremsassistent eine Speichereinrichtung aufweist, in welcher mindestens ein zeitlicher Verlauf des Bremsdrucks abgelegt ist, der durch eine in der Speichereinrichtung abgelegte Funktion oder Kennfeld bestimmt wird, wobei in der Speichereinrichtung ein progressiver Verlauf, ein degressiver Verlauf und ein konstanter Verlauf abgelegt sind und
die Vorrichtung weiterhin eine Fahrerbeobachtungseinrichtung aufweist, die den Verlauf von Bremsvorgängen des Fahrers bestimmt, so dass anhand des Fahrerbremsverhalten der zeitliche Verlauf des Bremsdrucks festgelegt wird.

7. Vorrichtung nach Anspruch 6, **dadurch gekennzeichnet, dass** die Vorrichtung eine Benutzeroberfläche aufweist, mittels welcher der Fahrer den zeitlichen Verlauf des Bremsdrucks auswählt.

## Claims

1. Method for targeted braking of a motor vehicle by means of braking force assistance of a braking process carried out by a driver by means of a brake assistant, wherein the distance from an object located in front of the motor vehicle is sensed and the brake pressure generated by the brake assistant is regulated at least as a function of the driver-side braking force and the distance information in such a way that when the brake is actuated by the driver and there is a driver-side braking force which is too small with respect to the distance information the brake assistant suitably increases the brake pressure in order to avoid a collision,
**characterized in that**
the brake pressure has a predetermined time profile which is implemented by a progressive profile (I), a degressive profile (II) or a constant profile (III), and
the selection of the predetermined time profile of the brake pressure is carried out by observing the braking behaviour of the driver.

2. Method according to Claim 1, **characterized in that** the observation takes place over a predetermined number of braking processes on the basis of which the braking behaviour of the driver is determined.

3. Method according to one of Claims 1 or 2, **characterized in that** the driver selects the predetermined time profile by means of a user interface.

4. Method according to one of the preceding claims, **characterized in that** the selection of the predetermined profile is furthermore a function of the state of the surroundings of the motor vehicle.

5. Method according to Claim 4, **characterized in that** the state of the road is detected and the selection of the predetermined profile is influenced.

6. Device for carrying out the method according to one of the preceding claims, having
a brake assistant, and
an apparatus for measuring the distance from an object located in front of the motor vehicle, wherein the brake pressure generated by the brake assistant is regulated at least as a function of the driver-side braking force and the distance information in such a way that when the brake is actuated by the driver and there is a driver-side braking force which is too small with respect to the distance information the brake assistant suitably increases the brake pressure in order to avoid a collision,
**characterized in that**
the brake assistant has a memory apparatus in which at least one time profile of the brake pressure is stored, said profile being determined by a function or characteristic diagram stored in the memory apparatus, wherein a progressive profile, a degressive profile and a constant profile are stored in the memory apparatus, and
the device also has a driver observation device which determines the profile of braking processes of the driver, with the result that the time profile of the brake pressure is defined on the basis of the driver braking behaviour.

7. Device according to Claim 6, **characterized in that** the device has a user interface by means of which the driver selects the time profile of the brake pressure.

## Revendications

1. Procédé de freinage ciblé d'un véhicule automobile par assistance au freinage d'une opération de freinage réalisée par le conducteur au moyen d'un système d'assistance au freinage d'urgence, la distance à un objet se trouvant devant le véhicule automobile étant détectée et la pression de freinage produite par le système d'assistance au freinage d'urgence étant régulée au moins en fonction de la force de freinage appliquée par le conducteur et des informations de distance de telle sorte que dans le cas d'un actionnement du frein par le conducteur et d'une force de freinage trop faible appliquée par le conducteur par rapport aux informations de distance, le système d'assistance au freinage d'urgence augmente de manière appropriée la pression de freinage pour éviter une collision,
**caractérisé en ce que**
la pression de freinage présente une courbe temporelle prédéterminée qui est constituée par une courbe progressive (I), une courbe dégressive (II) ou une courbe constante (III), et
la sélection de la courbe temporelle prédéterminée de la pression de freinage a lieu par observation du comportement de freinage du conducteur.

2. Procédé selon la revendication 1, **caractérisé en ce que** l'observation a lieu par le biais d'un nombre prédéterminé d'opérations de freinage à l'aide desquelles le comportement de freinage du conducteur est déterminé.

3. Procédé selon l'une quelconque des revendications 1 ou 2, **caractérisé en ce que** le conducteur sélectionne la courbe temporelle prédéterminée par le biais d'une surface utilisateur.

4. Procédé selon l'une quelconque des revendications précédentes, **caractérisé en ce que** la sélection de la courbe prédéterminée est en outre fonction de l'état de l'environnement du véhicule automobile.

5. Procédé selon la revendication 4, **caractérisé en ce que** l'état de la route est détecté et influence la sélection de la courbe prédéterminée.

6. Dispositif pour mettre en oeuvre le procédé selon l'une quelconque des revendications précédentes, comprenant
un système d'assistance au freinage d'urgence, et un système de mesure de la distance à un objet se trouvant devant le véhicule automobile,
la pression de freinage produite par le système d'assistance au freinage d'urgence étant régulée au moins en fonction de la force de freinage appliquée par le conducteur et d'informations de distance, de telle sorte que dans le cas d'un actionnement du frein par le conducteur et d'une force de freinage trop faible appliquée par le conducteur par rapport aux informations de distance, le système d'assistance au freinage d'urgence augmente de manière appropriée la pression de freinage pour éviter une collision, **caractérisé en ce que**
le système d'assistance au freinage d'urgence présente un système de mémoire dans lequel au moins une courbe temporelle de la pression de freinage est consignée, laquelle est déterminée par une fonction ou un champ caractéristique consigné dans le système de mémoire, une courbe progressive, une courbe dégressive et une courbe constante étant consignées dans le système de mémoire et
le dispositif présente en outre un dispositif d'observation du conducteur, qui détermine la courbe à partir d'opérations de freinage du conducteur, de telle sorte que la courbe temporelle de la pression de freinage soit établie à l'aide du comportement de freinage du conducteur.

7. Dispositif selon la revendication 6, **caractérisé en ce que** le dispositif présente une surface utilisateur au moyen de laquelle le conducteur sélectionne la courbe temporelle de la pression de freinage.
